# EUROPEAN PATENT SPECIFICATION

(11) **EP 3 832 848 B1**
(45) Date of publication and mention of the grant of the patent: **14.02.2024**
(21) Application number: 19383078.3
(22) Date of filing: 04.12.2019
(51) Int. Cl.: H02J 50/90, H02J 50/10, H02J 7/35, H02J 7/00

(54) **SYSTEM AND METHOD FOR CHARGING ELECTRONIC DEVICES**
SYSTEM UND VERFAHREN ZUM LADEN VON ELEKTRONISCHEN VORRICHTUNGEN
SYSTÈME ET PROCÉDÉ POUR CHARGER DES DISPOSITIFS ÉLECTRONIQUES

(43) Date of publication of application: 09.06.2021
(73) Proprietor: Proton New Energy Future, S.L., 08304 Mataró (Barcelona) (ES)
(72) Inventor: CREIXELL SANS, Jordi, 08304 MATARO (BARCELONA) (ES); JOVÉ PERALTA, Miquel, 08304 MATARO (BARCELONA) (ES); OLIVA SOLÀ, Cristina, 08304 MATARO (BARCELONA) (ES)
(74) Representative: Herrero & Asociados, S.L.

(56) References cited:
- CN-U- 201 617 286
- CN-U- 204 928 283
- ES-U- 1 212 415
- US-A1- 2003 231 001
- US-A1- 2009 128 086
- US-A1- 2011 260 674
- US-A1- 2014 265 998
- US-A1- 2017 194 809

## Description

The present invention refers to a system and method for charging electronic devices.

### Background of the invention

Most of electronic devices are charged by cables. However, in the recent years there are wireless systems that permit to charge electronic devices not using any cable.

In 2011 a first Qi wireless smartphone case was introduced in the market, followed shortly thereafter by smartphones with built-in Qi wireless support.

Qi wireless devices need only to be set down on a Qi wireless charger for recharging to occur. The device remains unplugged and ready to be picked up and used at any moment. With the deployment of Qi chargers in cars, enterprises, and public locations, it becomes possible to no longer worry about running out of charge or carrying charger cables.

The Qi wireless power transfer system uses magnetic induction to transfer power to a power receiver (PRx) subsystem contained within the mobile device when it is placed on top of a power transmitter (PTx).

Both the PTx and PRx subsystems contain coils, as well as circuitry that handles the communication and power transfer between them.

The basic physical principle that governs the functionality defined in the Qi wireless power transfer specification is magnetic induction: the phenomenon that a time-varying magnetic field generates an electromotive force in a suitably positioned inductor.

In a Qi wireless power transfer system, this electromotive force produces a voltage across the terminals of a coil-shaped inductor and is used to drive PTx coil Power cable PRx coil the electronics of an appropriate load to which it is connected.

Conventional transformers use the same effect to achieve inductive power transfer between a primary and a secondary coil that are strongly coupled by means of a magnetic core.

Although a Qi-based system is similar to a conventional transformer in the sense that power is transferred from a first coil to a second coil, it is also very different because of the much lower magnetic coupling between those coils. A conventional transformer has a magnetic coupling coefficient close to one, whereas a Qi-based system typically has a magnetic coupling coefficient in the range of 0.8 or below.

Some electronic devices, such as e.g. smartphone cases, may contain metallic objects, such as external decorations or internal metallic layers. These objects may affect the efficiency of the wireless power transfer or prevent it altogether.

Neither the power transmitter nor the power receiver can prevent foreign objects from being placed in the field, because they cannot control a user's actions. However, the power transmitter and/or power receiver have to detect the presence of such foreign objects and take appropriate action to prevent the objects from heating up to unacceptably high temperatures.

Typically, only the power transmitter has sufficient knowledge of the extent and strength of its magnetic field to determine whether foreign objects are present. However, a complication is that the power transmitter cannot by itself distinguish between foreign objects and friendly metals that are insufficiently shielded.

In order to reliably detect foreign objects, the power transmitter therefore needs to receive appropriate information from each power receiver it is serving. The Qi specification defines the kind of information that a power receiver has to provide for this purpose. However, the specification does not define a single method for foreign object detection (FOD) that a power transmitter has to apply. Instead, compliance testing verifies that a power transmitter does not heat up a set of reference foreign objects in a set of reference scenarios.

FOD extensions use bidirectional communications and negotiation between the power transmitter and power receiver to enhance the options for foreign object detection. Support for FOD extensions is optional in the baseline power profile (≤ 5 W) but mandatory in the extended power profile (≤ 15 W).

The problem detected in current solutions is the constant energy consumption that is required for the detection of objects with Qi load or objects that do not have a Qi load. It implies a very high consumption since a detection system that is always active is needed (at least the presence sensor of an object).

In addition, not all Qi emitting chargers have the support (FOB, Foreign object) to reject metallic elements and not activate electromagnetic emission to prevent heating of objects. The FOB system also requires energy consumption (5 - 15W).

Another problem is that the existing loading area is very limited, the most common solution being a single coil, and the most innovative design being a loading surface of up to 6 coils.

The more coils that make up the load surface, a multiplier element of energy consumption per surface appears. If we continue with the standards of energy consumption for the operation of the coils, it is not efficient to increase the load area.

On the other hand, ES 1 212 415 U, from the same applicant as the present application, discloses a solar table with an integrated inductive charger comprising a solar or light panel that transforms the light photons in electricity for charging an electronic device, but this document does not disclose any means for detecting an object placed on the solar table.

US2017194809A1 discloses systems and methods for inductive powering and/or charging of electric or electronic devices or batteries. The system may comprise a base unit, such as a charger or power supply, which includes one or more primary coils generally having a planar or curved surface. Each primary coil can be activated to generate a magnetic field in a direction substantially perpendicular to the planar or curved surface to provide power to one or more inductive power receiver coils of a receiver to power or charge one or more portable devices or batteries.

US2014265998A1 discloses the provision of energy to a rechargeable battery of a mobile electronic device. The mobile electronic device has an array of photovoltaic cells embedded therein or affixed thereto. The array of photovoltaic cells is electrically connected to the rechargeable battery of the mobile electronic device. A charging pad includes an array of optical emitters, which are configured to emit light when the mobile electronic device rests on or adjacent to the charging pad.

### Description of the invention

With the system and method for charging electronic devices according to the present invention it is possible to solve said drawbacks, providing other advantages that are described below.

The present invention refers to a system for charging electronic devices according to claim 1.

The present invention refers to a method for charging electronic devices according to claim 8.

Preferred embodiments of the invention are defined by the dependent claims

The system and method according to the present invention provide at least the following advantages:
The energy consumption of the components that manage the system is reduced, so that it is able to expand the charging surface, which is fed with renewable energy.

The loading surface is greater than the conventional charging system, such as, e.g. 370 x 465mm, obtaining superimposed coils to optimize the position between PTx and PRx coils.

The photovoltaic panel used for feeding the coils also acts as a sensor, providing a complete system, with no consumption because it can be disactivated since the photovoltaic panel does not need to consume energy to act as a sensor, and the system is activated only when the photovoltaic panel detects the presence of an electronic device to be charged.

As the photovoltaic panel detects an electronic device by the shadow that it generates and as every cm2 of shadow generates a potential differential in the panel, the shadow generated by electronic devices which contain Qi (such as smartphones, tablets, etc.) is calibrated. Therefore, the charging is activated only if there is a possibility that the element deposited on the charging area is a Qi electronic device.

If, for example, keys are left on the surface, the photovoltaic panel detects that it is not the same size as a Qi electronic device, and therefore it is not necessary to activate the charging area.

Another advantage is that the photovoltaic panel is divided into several zones, and it is also detected in which quadrant the Qi electronic device is, for activating and performing the Qi electronic device checking. That is, there are bounded areas to increase the efficiency of energy management.

### Brief description of the drawings

For a better understanding the above explanation and for the sole purpose of providing an example, some non-limiting drawings are included that schematically depict a practical embodiment.

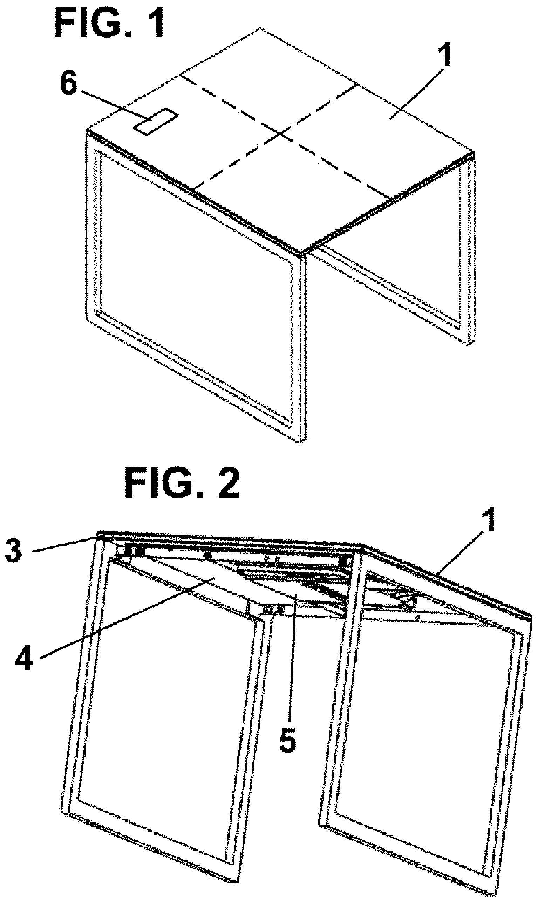

Figure 1 is a perspective view showing the upper portion of the charging system according to the present invention;
Figure 2 is a perspective view showing the lower portion of the charging system according to the present invention;

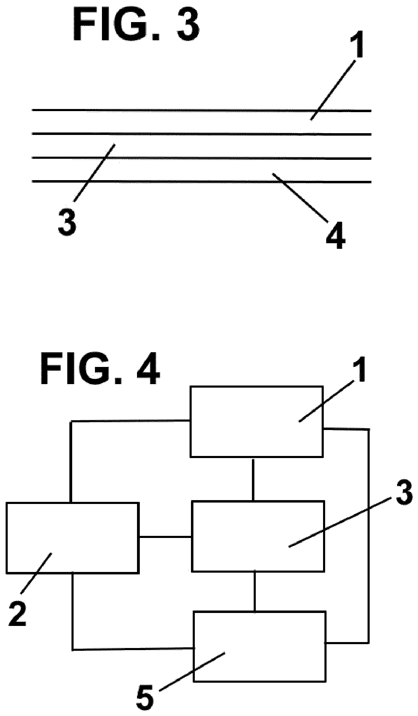

Figure 3 is a diagrammatical section view showing the layers forming the table of the charging system according to the present invention; and
Figure 4 is a block chart showing the components of the charging system according to the present invention.

### Description of a preferred embodiment

The system for charging electronic devices of present invention, according to a preferred embodiment, is a table comprising:
- an electric source (1), such as a photovoltaic panel (1), e.g. a top glass surface;
- a battery (2), such as a lithium battery, for storing electrical energy;
- a charging layer (3), such as e.g. a Qi electronical induction layer, which transmits energy to portable electronic devices (6); and
- a base (4) comprising an electronic control unit (5) for driving the light to electrical energy transformation and storage, for controlling the charging layer (3) and communication procedures; for communicating to the environment, e.g. through Bluetooth, NFC and WIFI protocols.

The charging layer (3) establishes a permanent and bidirectional information channel between the system and the electronic devices (6) in charging status.

The charging system according to the present invention does not use external wiring. So, all energy needs are covered by light from the environment.

In order to optimize the photovoltaic energy acquisition, the photovoltaic panel (1) comprises preferably two or more independent photovoltaic generators coexisting on the single photovoltaic panel (1).

This photovoltaic panel (1) also includes preferably a laminated double glass to achieve a strong surface for any type of use, and a film on the internal face.

According to an example, the charging layer (3) has e.g. dimensions of 370 x 465 mm of charge area, integrating (6) charging pieces (with dimensions 185 x 155 mm) and there are 21 coils/piece.

Theses 21 coils ensure the correct charging operation with a free positioning of an electronic device (6) on the charging surface (3). As much coils, the connection between PTx and PRx is optimized.

When there are no portable electronic devices to be charged, the charging system must spend as less energy as possible, so that the battery cycle can be optimal.

The portable electronic devices (6) are charged in any position, on top of the table. It is necessary to detect if there are any devices to be charged; to reject devices, including metal-based devices; and it is also necessary to define witch specific coil shall take care of the charging.

The activated Qi coil establishes also a permanent and bidirectional information channel between the charging layer (3) and the electronic device (6) in charging status.

The object detection according to the present invention is based on the optical shadow produced by the electronic device (6), and also the user arm over the photovoltaic panel (1). Every time that the control unit (5) detects a local voltage change on the photovoltaic panel (1), it starts a search of an electronic device (6).

To detect the electronic device (6), the system activates the coils in the photovoltaic panel (1) sequentially, one coil after the other.

If a metal-based element is detected, the active coil asks the object sending a request signal. If the object answers with a response signal, such as a Qi recognized code, then the search sequence ends up and the charge sequence starts.

Furthermore, the work methodology of the photovoltaic panel (1) is based on capturing photons and generating potential through the panel. When a shadow is detected, the photovoltaic panel (1) receives less photons and therefore the energy generation is altered, the potential generation being lower.

Depending on the shadow generated by the electronic device (6), a voltage differential range has been set, such as e.g. of 20 Vdc instantaneous.

When this differential is detected, the search for the electronic device (6) begins.

For reducing the energy consumption, the photovoltaic panel (1) is divided into several zones, e.g. 4 quadrants, so that the detection focuses only on the quadrant in which the electronic device (6) is located. Otherwise, a search would have to be carried out on the entire surface, consuming more energy.

Even though reference has been made to a specific embodiment of the invention, it is obvious for a person skilled in the art that the system and method for charging electronic devices described herein are susceptible to numerous variations and modifications within the scope of the appended claims, and that all of the details mentioned can be substituted for other technically equivalent ones without departing from the scope of protection defined by the attached claims.

## Claims

1. System for charging electronic devices, comprising:
- an electric power source (1);
- a I charging layer (3) comprising a plurality of coils; the charging layer (3) is configured to charge wirelessly electronic devices (6); the electric power source (1) is placed on the top of the charging layer (3) and is configured to cover the surface of the charging layer (3);
- an electronic control unit (5) configured to control several coils on the system, and to detect if an electronic device (6) to be charged is placed on the electric source (1), and if a signal from the electronic device (6) is received,
**characterized in that** the electric power source (1) is a photovoltaic panel that is configured to supply power to the coils and is also configured to act as a sensor, the electronic control unit (5) is configured to detect pontential difference on the photovoltaic panel caused by time relative variations of light received by the photovoltaic panel by the shadow that the electronic device generates when it is placed on the charging layer(3).

2. System for charging electronic devices according to claim 1, wherein the charging layer (3) comprises more than 8 coils which are configured to be controlled by the electronic control unit (5).

3. System for charging electronic devices according to claim 1, wherein the charging layer (3) has a minimum surface of 285 cm².

4. System for charging electronic devices according to claim 2 or 3, wherein the coils are configured to be integrated in a unique PCB.

5. System for charging electronic devices according to claim 1, wherein the system also comprises a battery (2) configured to be connected with the electric power source (1) and with the charging layer (3).

6. System for charging electronic devices according to claim 1, wherein the coils are induction coils.

7. System for charging electronic devices according to claim 1, wherein the system further comprises a base placed below the charging layer (3) and the electronic control unit (5) is configured to be placed in the base (4).

8. Method for charging electronic devices with the system according to anyone of the previous claims, **characterized in that** the method comprises the following steps:
- detecting a voltage change on the photovoltaic panel (1) by the electronic control unit (5);-searching the electronic device (6) to be charged detecting time relative variations of light received by the photovoltaic panel (1) by the shadow that the electronic device generates, generating a potential difference in the panel (1);
- sending a request signal to said electronic device (6) by said electronic control unit (5); and
- if a response signal to said request signal is received, power on at least a part of a charging layer (3), charging the electronic device (6).

9. Method for charging electronic devices according to claim 8, wherein photovoltaic panel (1) is divided in several zones and the searching of the electronic device (6) is carried out only in the zone where the voltage change has been detected.

10. Method for charging electronic devices according to any of claims 8 or 9, when the voltage change has been detected, the inductions coils are activated sequentially, until the response signal is received.

## Patentansprüche

1. System zum Laden elektronischer Vorrichtungen, umfassend:
- eine Elektroenergiequelle (1):
- eine Ladeschicht (3), umfassend mehrere Spulen; wobei die Ladeschicht (3) zum drahtlosen Laden elektronischer Vorrichtungen (6) ausgebildet ist; wobei die Elektroenergiequelle (1) oben auf der Ladeschicht (3) platziert und zum Abdecken der Oberfläche der Ladeschicht (3) ausgebildet ist;
- eine elektronische Steuerungseinheit (5), die dazu ausgebildet ist, mehrere Spulen an dem System zu steuern und zu erfassen, ob eine zu ladende elektronische Vorrichtung (6) an der elektrischen Quelle (1) platziert ist und ob ein Signal aus der elektronischen Vorrichtung (6) empfangen wird,
**dadurch gekennzeichnet, dass** die Elektroenergiequelle (1) ein Photovoltaikpanel ist, das zur Versorgung der Spulen mit Energie ausgebildet ist und ebenso dazu ausgebildet ist, als ein Sensor zu fungieren, wobei die elektronische Steuerungseinheit (5) dazu ausgebildet ist, eine Potentialdifferenz an dem Photovoltaikpanel zu erfassen, die durch zeitbedingte Lichtschwankungen verursacht wird, die das Photovoltaikpanel durch den Schatten, den die elektronische Vorrichtung erzeugt, wenn sie auf der Ladeschicht (3) platziert wird, aufnimmt.

2. System zum Laden elektronischer Vorrichtungen nach Anspruch 1, wobei die Ladeschicht (3) mehr als 8 Spulen umfasst, die so ausgebildet sind, dass sie von der elektronischen Steuerungseinheit (5) gesteuert werden.

3. System zum Laden elektronischer Vorrichtungen nach Anspruch 1, wobei die Ladeschicht (3) eine Mindestoberfläche von 285 cm² aufweist.

4. System zum Laden elektronischer Vorrichtungen nach Anspruch 2 oder 3, wobei die Spulen so ausgebildet sind, dass sie in eine einzige PCB integriert sind.

5. System zum Laden elektronischer Vorrichtungen nach Anspruch 1, wobei das System ebenso eine Batterie (2) umfasst, die so ausgebildet ist, dass sie an die Elektroenergiequelle (1) und die Ladeschicht (3) angeschlossen werden kann.

6. System zum Laden elektronischer Vorrichtungen nach Anspruch 1, wobei die Spulen Induktionsspulen sind.

7. System zum Laden elektronischer Vorrichtungen nach Anspruch 1, wobei das System ferner eine unter der Ladeschicht (3) platzierte Basis umfasst, und die elektronische Steuerungseinheit (5) so ausgebildet ist, dass sie in der Basis (4) platziert werden kann.

8. Verfahren zum Laden elektronischer Vorrichtungen mit dem System nach einem der vorstehenden Ansprüche, **dadurch gekennzeichnet, dass** das Verfahren die folgenden Schritte umfasst:
- Erfassen einer Spannungsänderung an dem Photovoltaikpanel (1) mittels der elektronischen Steuerungseinheit (5);
- Suchen der zu ladenden elektronischen Vorrichtung (6) durch Erfassen zeitbedingter Lichtschwankungen, die das Photovoltaikpanel (1) durch den Schatten, den die elektronische Vorrichtung erzeugt, aufnimmt,
- Erzeugen einer Potentialdifferenz in dem Panel (1);
- Senden eines Anfragesignals an die elektronische Vorrichtung (6) mittels der elektronischen Steuerungseinheit (5); und
- beim Empfangen eines Antwortsignals auf das Anfragesignal, Speisen zumindest eines Teils einer Ladeschicht (3), wodurch die elektronische Vorrichtung (6) geladen wird.

9. Verfahren zum Laden elektronischer Vorrichtungen nach Anspruch 8, wobei das Photovoltaikpanel (1) in mehrere Zonen eingeteilt wird und das Suchen der elektronischen Vorrichtung (6) nur in der Zone erfolgt, in der die Spannungsänderung erfasst worden ist.

10. Verfahren zum Laden elektronischer Vorrichtungen nach einem der Ansprüche 8 oder 9, wobei bei der Erfassung der Spannungsänderung die Induktionsspulen nacheinander aktiviert werden, bis das Antwortsignal empfangen wird.

## Revendications

1. Système de chargement d'appareils électroniques comprenant :
- une source d'énergie électrique (1) ;
- une couche de chargement (3) comprenant plusieurs bobines ; la couche de chargement (3) est configurée pour charger sans fil des appareils électroniques (6) ; la source d'énergie électrique (1) est placée au-dessus de la couche de chargement (3) et est configurée pour couvrir la surface de la couche de chargement (3) ;
- une unité électronique de contrôle (5) configurée pour contrôler plusieurs bobines du système et pour détecter si un appareil électronique (6) à charger est placé sur la source électrique (1) et si un signal provenant de l'appareil électronique (6) est reçu,
**caractérisé en ce que** la source d'énergie électrique (1) est un panneau photovoltaïque qui est configuré pour alimenter les bobines et est également configuré pour agir comme un capteur, l'unité électronique de contrôle (5) est configurée pour détecter la différence de potentiel au niveau du panneau photovoltaïque causée par des variations relatives dans le temps de lumière reçue par le panneau photovoltaïque dues à l'ombre que l'appareil électronique génère lorsqu'il est placé sur la couche de chargement (3).

2. Système de chargement d'appareils électroniques selon la revendication 1, dans lequel la couche de chargement (3) comprend plus de 8 bobines qui sont configurées pour être contrôlées par l'unité électronique de contrôle (5).

3. Système de chargement d'appareils électroniques selon la revendication 1, dans lequel la couche de chargement (3) a une surface minimale de 285 cm².

4. Système de chargement d'appareils électroniques selon la revendication 2 ou 3, dans lequel les bobines sont configurées pour être intégrées dans un circuit imprimé unique.

5. Système de chargement d'appareils électroniques selon la revendication 1, dans lequel le système comprend également une batterie (2) configurée pour être connectée à la source électrique (1) et à la couche de chargement (3).

6. Système de chargement d'appareils électroniques selon la revendication 1, dans lequel les bobines sont des bobines d'induction.

7. Système chargement d'appareils électroniques selon la revendication 1, dans lequel le système comprend en outre une base placée sous la couche de chargement (3) et l'unité électronique de contrôle (5) est configurée pour être placée dans la base (4).

8. Procédé de chargement d'appareils électroniques à l'aide du système selon l'une quelconque des revendications précédentes, **caractérisée en ce que** le procédé comprend les étapes suivantes :
- détection d'une variation de tension au niveau du panneau photovoltaïque (1) par l'unité électronique de contrôle (5) ;
- recherche de l'appareil électronique (6) à charger détectant des variations temporelles relatives de lumière reçue par le panneau photovoltaïque (1) dues à l'ombre que l'appareil électronique génère, génération d'une différence de potentiel dans le panneau (1) ;
- envoi d'un signal de requête au dit appareil électronique (6) par ladite unité électronique de contrôle (5) ; et
- si un signal de réponse au dit signal de requête est reçu, alimenter en énergie au moins une partie d'une couche de chargement (3), chargeant ainsi l'appareil électronique (6).

9. Procédé de chargement d'appareils électroniques selon la revendication 8,
dans lequel le panneau photovoltaïque (1) est divisé en plusieurs zones et la recherche de l'appareil électronique (6) n'est effectuée que dans la zone dans laquelle la variation de tension a été détectée.

10. Procédé de chargement d'appareils électroniques selon l'une des revendications 8 ou 9, lorsque la variation de tension a été détectée, les bobines d'induction sont activées séquentiellement jusqu'à ce que le signal de réponse soit reçu.
